Europäisches Patentamt

European Patent Office

Office européen des brevets

(11) Numéro de publication: **0 286 618**
**A1**

(12) # DEMANDE DE BREVET EUROPEEN

(21) Numéro de dépôt: **88870030.9**

(22) Date de dépôt: **02.03.88**

(51) Int. Cl.⁴: **C 04 B 11/032**

(30) Priorité: **04.03.87 LU 86800**

(43) Date de publication de la demande:
**12.10.88 Bulletin 88/41**

(84) Etats contractants désignés: **ES GR**

(71) Demandeur: **Janssens, Luc**
**Berkenlaan 19**
**B-2610 Wilrijk-Antwerpen (BE)**

(72) Inventeur: **Janssens, Luc**
**Berkenlaan 19**
**B-2610 Wilrijk-Antwerpen (BE)**

(74) Mandataire: **Van Malderen, Michel et al**
**p.a. Freylinger & Associés 22 avenue J.S. Bach (bte 43)**
**B-1080 Bruxelles (BE)**

(54) **Installation pour la préparation de plâtre de haute résistance.**

(57) Installation pour la préparation de plâtre à haute résistance à partir de sulfate de calcium naturel (gypse) ou de synthèse, caractérisée en ce qu'elle comporte au moins un transporteur à chaînes sans fin (13) équipé de palettes basculables (53) qui est dévié sur des pignons de renvoi (5) de manière à former au moins un brin supérieur (9, 15, 21) et un brin inférieur (11, 17, 23), une trémie d'alimentation (27) en matière de départ disposée au-dessus du premier brin supérieur (9) et un dispositif de chauffage dont les gaz chauds sont propulsés dans des chambres (31 à 39) disposées entre chaque fois un brin supérieur et un brin inférieur.

FIG.1

EP 0 286 618 A1

**Description**

### Installation pour la préparation de plâtre de haute résistance.

La présente invention est relative à une installation pour la préparation de plâtre à haute résistance à partir de sulfate de calcium naturel (gypse) ou de synthèse (sulfogypse, phosphogypse et autres sous-produits de synthèse).

On sait actuellement préparer des plâtres de haute résistance (désignés par "plâtres α", du fait qu'ils sont essentiellement constitués par des semihydrates ou anhydrites de variété α ) qui, une fois durcis, présentent des caractéristiques mécaniques beaucoup plus élevées que celles des plâtres courants (désignés par "plâtres β " car essentiellement composés de la variété β ). Ainsi la résistance en compression des plâtres α peut varier entre 300 et 600 bars et leur résistance en flexion entre 80 et 160 bars, alors que, pour les plâtres β , ces résistances varient respectivement entre 50 et 100 bars et entre 10 et 20 bars.

Par le document FR-A-84 17 162 on connaît une installation de production de plâtre α , dans laquelle des plateaux sont montés sur un axe central et la matière, c'est-à-dire du sulfate de calcium sous forme de poudre, est déplacée par une grille pour tomber de plateau en plateau à travers une ouverture pratiquée dans chaque plateau. Il en résulte que la matière soumise aux traitements thermiques nécessaires classiques subit un mouvement; ce qui améliore le rendement du procédé et/ou la qualité du produit obtenu. Toutefois, cette installation présente l'inconvénient qui consiste en ce qu'il est difficile d'y effectuer les traitements thermiques aux températures voulues. Par ailleurs, l'installation ne donne pas entière satisfaction en ce qui concerne la rentabilité du procédé et la qualité du produit obtenu.

Le but de la présente invention consiste à fournir une installation de fabrication de plâtre de haute résistance, présentant une construction simple, peu encombrante, sans comporter les inconvénients de l'installation connue. Un autre but de la présente invention consiste à fournir des unités mobiles pour la fabrication de plâtre de haute résistance. Un autre but de la présente invention est de fournir une installation qui permet la fabrication d'un plâtre de haute résistance tel que le plâtre α selon un procédé continu, à partir de gypse naturel ou de sous-produits ou résidus de synthèse.

Selon la présente invention, l'installation comporte au moins un transporteur à chaînes sans fin équipé de palettes basculables qui est dévié sur des pignons de renvoi de manière à former au moins un brin supérieur et un brin inférieur, une trémie d'alimentation en matière de départ disposée au-dessus du premier brin supérieur et un dispositif de chauffage dont les gaz chauds sont propulsés dans des chambres disposées entre chaque fois un brin supérieur et un brin inférieur.

Le nombre de renvoi du transporteur à chaînes dépend de la longueur du trajet linéaire et de la capacité de traitement recherchée.

Selon une première forme d'exécution, l'installation conforme à l'invention comporte trois étages de renvoi du transporteur à chaînes, c'est-à-dire six brins supérieurs et inférieurs. Elle peut toutefois aussi en comporter encore plus, selon les exigences posées.

Conformément à une autre forme d'exécution, l'installation comporte encore, en aval du transporteur à chaînes sans fin, au moins un étage comportant au moins une auge équipée d'une vis de transport, les gaz chauds circulant dans lesdites auges.

De préférence, l'installation conforme à la présente invention comporte plusieurs étages d'auges et chaque étage comporte plusieurs auges essentiellement parallèles.

Conformément à la présente invention, les palettes basculables sont maintenues en position essentiellement horizontale le long du parcours d'un brin supérieur ou inférieur du transporteur à chaînes et basculent en fin de parcours en vue de décharger la matière transportée respectivement sur les palettes du brin inférieur ou supérieur suivant, dans la ou les auges montées en aval ou éventuellement à travers l'ouverture de déchargement, à la sortie de l'installation. Il en résulte que la matière subit, au cours de son traitement au moins un renversement et brassage; ce qui permet d'améliorer l'homogénéité du produit obtenu.

Une vis de transport est agencée de manière à pouvoir tourner dans une auge et y transporter et remuer la matière avant de la déverser dans un étage d'auge(s) inférieure ou au travers d'une ouverture de déchargement.

Dans la mesure où l'installation comporte plusieurs étages d'auges, il est prévu que la matière se déplace dans un sens dans un premier étage et dans le sens opposé, dans l'étage suivant. Pour ce faire, on peut prévoir que la ou les vis du premier étage tourne(nt) dans un sens et que la ou les vis de l'étage suivant tourne(nt) dans le sens opposé ou, de préférence, que toutes les vis tournent dans le même sens, la vis du premier étage comportant un pas de vis inverse de celle du deuxième étage.

En variante, il est prévu que, dans un meme étage, la matière passe d'une auge à l'autre pour être transportée selon un mouvement de va-et-vient, avant d'être déchargée dans l'étage suivant ou au travers de l'ouverture de déchargement.

Selon une forme d'exécution particulièrement préférée de l'invention, la vis de transport comporte un noyau sur lequel s'étend une saillie hélicoïdale qui est surmontée d'une partie d'hélice redressée essentiellement perpendiculaire à l'axe de manière telle qu'elle comporte un contour coudé. Il en résulte essentiellement que la matière subit un brassage; en effet, dans la zone proche de l'axe, la matière est entraînée et comprimée alors que, dans la zone périphérique, elle peut se détendre et même subir un certain mouvement de retour en annexe, c'est-à-dire inverse au sens du transport. Ce brassage de la matière facilite et améliore l'action de la vapeur.

Avantageusement, le transporteur à chaînes ou les vis se déplacent dans une chambre fermée comportant une ouverture d'admission du transporteur à chaînes et de la matière de départ, un ou plusieurs étages d'auges ainsi qu'une ouverture de sortie. Ladite chambre fermée est avantageusement équipée de vannes de surpression qui permettent de régler la pression à l'intérieur de ladite chambre.

De préférence, en vue de réduire la tension dans le transporteur à chaînes, une partie au moins des pignons de renvoi est équipée d'un moyen d'entraînement tel qu'un pignon extérieur sur lequel agit un couple d'entraînement.

L'installation selon la présente invention est avantageusement montée dans un caisson comportant une fenêtre qui permet de vérifier l'état des palettes qui sont recyclées, par exemple.

Par rapport à l'état de la technique susmentionné, l'avantage de l'installation conforme à la présente invention consiste en ce qu'il n'y a pas de raclage de la matière et que la matière est mieux brassée et rendue plus homogène par le renversement des palettes et le remous dû aux vis dans les auges.

D'autres détails apparaîtront plus clairement à la lecture de la description d'une forme d'exécution préférée donnée à l'appui des figures annexées dans lesquelles :

- la figure 1 est une vue schématique latérale de l'installation conforme à la présente invention;
- la figure 2 est une vue schématique à plus grande échelle d'un pignon de renvoi du transporteur à chaînes;
- la figure 3 est une vue schématique latérale de l'installation selon une variante;
- les figures 4A et 4B représente, respectivement, une vue de face et une vue latérale d'une partie de vis conforme à l'invention,
- la figure 5 est une vue en perspective d'une partie de vis conforme à l'invention.

En référence aux figures, des repères de référence identiques se rapportent à des éléments identiques ou analogues.

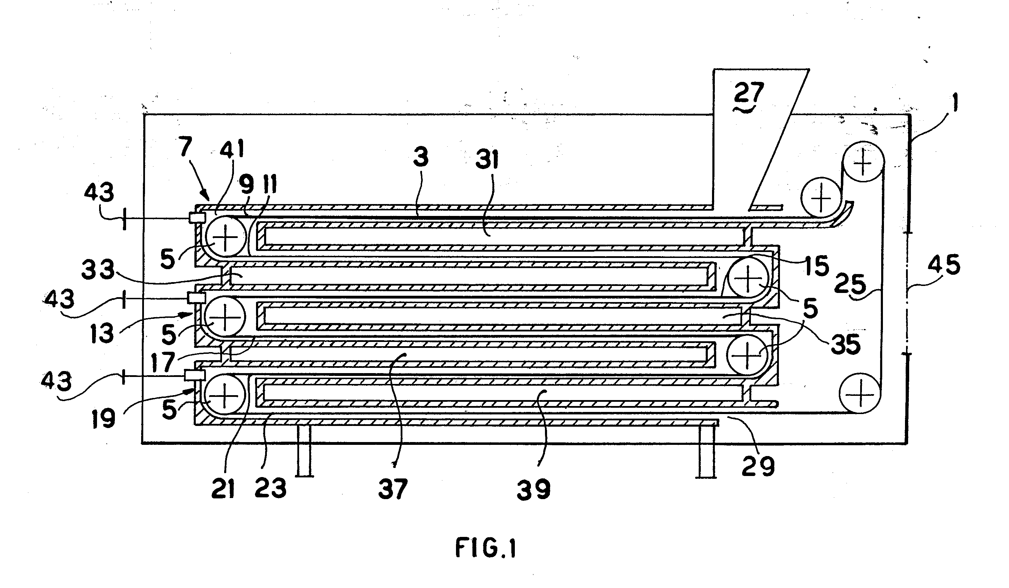

A la figure 1, on a représenté une installation pour la fabrication de plâtre α à partir de gypse ou de sulfate de calcium de synthèse, comportant dans un caisson 1 un transporteur à chaînes sans fin 3 équipé de palettes basculables, qui est dévié sur des pignons de renvoi 5 de manière à former trois étages 7, 13, 19 comportant chacun un brin supérieur 9, 15, 2 et un brin inférieur 11, 17, 23 avant d'être recyclé en 25. L'installation est équipée d'une trémie d'alimentation 27 et d'une ouverture de décharge 29. L'installation comporte également un dispositif de chauffage (non représenté) tel qu'un brûleur à gaz dont les fumées chaudes sont propulsées dans des chambres 31 à 39 disposées entre chaque fois un brin supérieur et un brin inférieur. Avantageusement, les fumées circulent du bas vers le haut, tandis que la matière est transportée du haut vers le bas.

Il est bien évident que l'installation réprésentée à la figure 1 est donnée à titre d'exemple non limitatif et qu'une installation conforme à la présente invention peut comporter, selon les besoins, plus de trois étages, par exemple 10 étages.

Selon la présente invention, le transporteur à chaînes circule dans une chambre continue 41 qui peut être équipée de vannes 43 pour le réglage de la pression.

Avantageusement, le caisson 1 est pourvu d'une fenêtre 45 qui permet de vérifier l'état du transporteur à chaînes et des palettes transportables, notamment dans le parcours de recyclage 25.

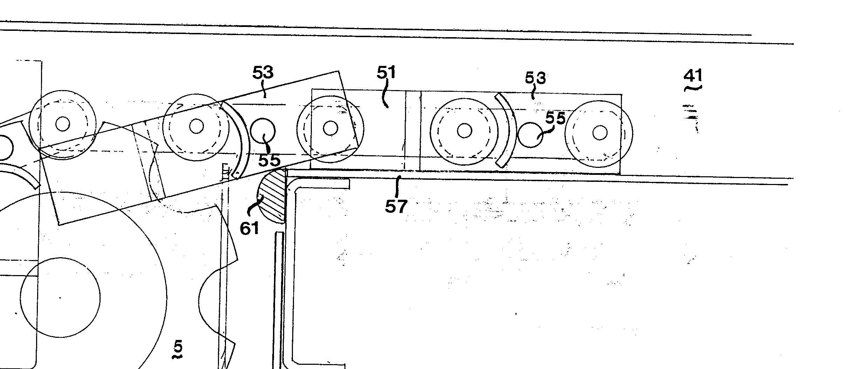

La figure 2 montre plus en détail un pignon de renvoi 5 et l'agencement du transporteur à chaînes. Ledit transporteur à chaînes se compose de deux chaînes à joues parallèles entre lesquelles sont logées des palettes basculables 53 sur un axe de basculement 55 solidaire de deux chaînes à joues 51. Le long du parcours d'un brin supérieur ou inférieur, lesdites palettes 53 sont maintenues en une position essentiellement horizontale grâce à des guides constitués par les parois inférieures 57, 59 de la chambre continue 41. En bout de parcours, les palettes 53 sont libérées et peuvent basculer la matière sur le brin situé en dessous d'elles.

La matière de départ alimentée par la trémie subit ainsi, au cours de son traitement, plusieurs renversements.

Le mouvement de basculement des palettes 53 est avantageusement guidé par des butées 61 et 63 qui empêchent que lesdites palettes ne heurtent les parois de chambre trop brusquement et entraînent de ce fait une usure prématurée de l'installation.

Avantageusement, la chambre continue 41 est équipée de racles 65 d'égalisation de la matière, notamment en aval d'un renversement, de telle sorte que la matière soit répartie sur les palettes et ne forme substantiellement pas d'agglomérats.

Selon une forme d'exécution préférée, les pignons de renvoi 5 sont pourvus d'un moyen d'entraînement (non représenté) tel que par exemple un pignon supplémentaire, monté à l'extérieur de la chambre 41 sur le même axe que celui du pignon 5, et sur lequel agit un couple d'entraînement. Il est bien évident que le passage dudit axe à travers les parois latérales de la chambre continue 41 se fait de manière étanche.

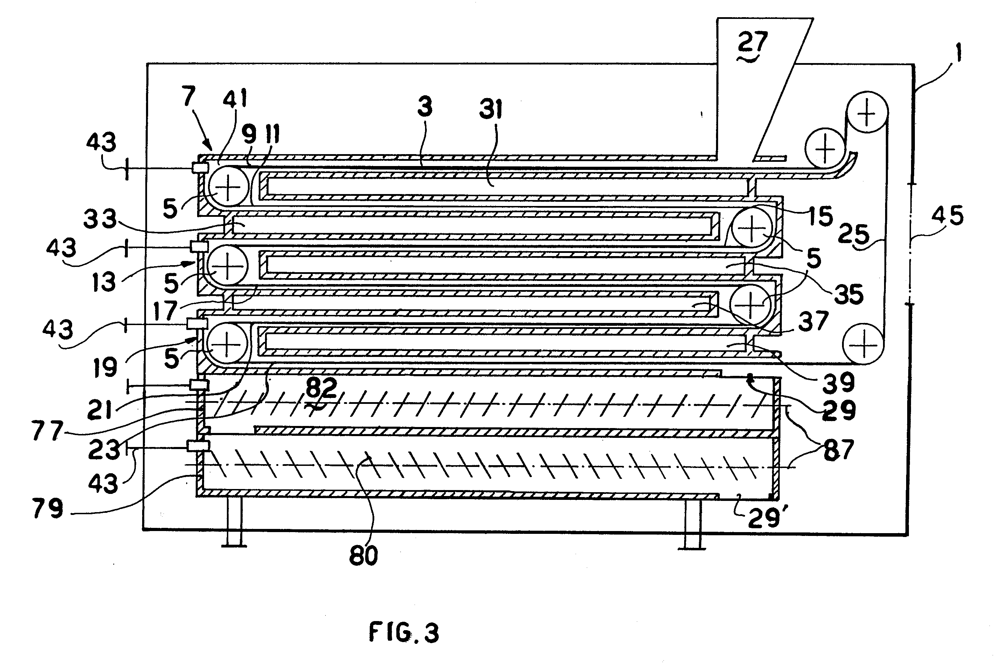

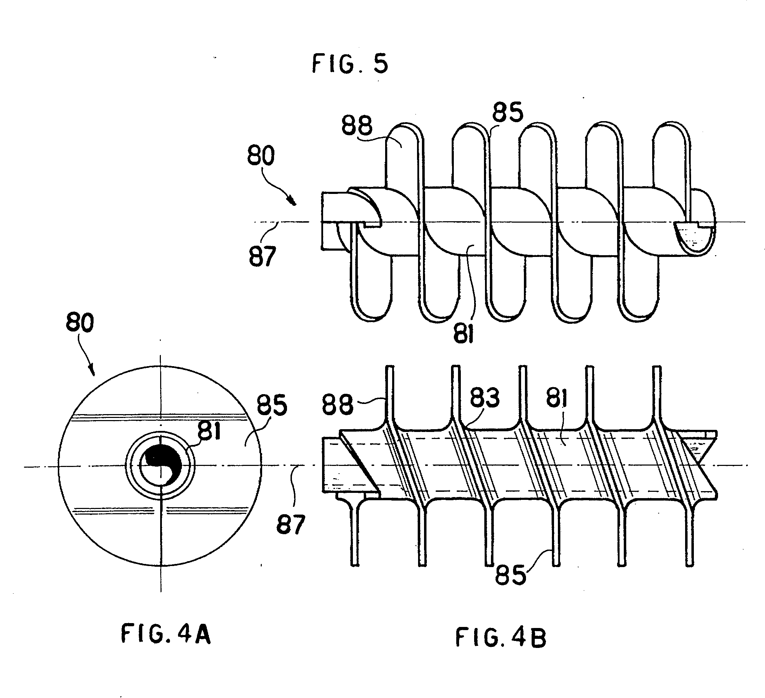

Selon une variante d'exécution (figure 3), l'installation de la figure 1 est suivie de plusieurs étages (77, 79) comportant chacun plusieurs auges dans lesquelles tournent des vis de transport 80 telles que représentées dans les figures 4 et 5. Dans ce cas, la matière déversée à travers l'ouverture de déchargement 29 tombe dans des auges et est emportée par des vis de transport 80.

Les vis de transport se composent de plusieurs éléments 80 assemblés de manière connue en soi. A l'extrémité opposée à l'alimentation, la matière est déchargée dans une auge inférieure 79 qui transporte la matière en sens inverse pour la déverser dans un étage inférieur supplémentaire ou au travers d'une ouverture de déchargement 29' de la matière traitée.

Avantageusement, les vis tournent toutes dans le même sens, la vis du premier étage 77 comportant un pas inverse de celle de l'étage suivant 79.

La vis comporte un noyau 81 sur lequel s'étend une saillie hélicoïdale 83 surmontée d'une partie d'helice redressée 85 essentiellement perpendiculaire à l'axe 87. Celle-ci est redressée de telle sorte qu'elle présente un coude 88. Ceci a pour effet que, dans la zone proche de l'axe, la matière est entraînée et subit, de ce fait, une compression et que, dans la zone périphérique, elle subit une certaine détente lui permettant de retomber, en maintenant un brassage intense. Il en résulte que les gaz chauds circulant dans les auges entrent en contact avec la matière toute entière et qu'on obtient une matière homogène de qualité élevée.

Sous une forme complémentaire, l'invention porte sur un procédé de traitement de la matière de départ afin d'obtenir un plâtre présentant de meilleures caractéristiques. Ce procédé est rendu possible par le recours à l'installation décrite ci-dessus.

Selon ce procédé, la matière de départ est concassée sous forme de poudre et est humidifiée à la température ambiante jusqu'à présenter une teneur en eau de l'ordre de 15 à 30 % d'eau exprimée par rapport à son poids de départ, et de préférence de l'ordre de 15 à 20 %.

La matière ainsi humidifiée est introduite dans l'installation dans une chambre de traitement qui elle-même est surchauffée à une température de l'ordre de 500 à 600°C.

Dans cette chambre de traitement, une production importante de vapeur se produit par ébullition de l'eau contenue dans la matière en poudre. Simultanément à l'action de cette vapeur, dans ladite chambre, un mouvement d'entraînement de la matière à l'aide de palettes se produit.

Cette action à l'état d'ébullition se poursuit après un premier démarrage dans ladite chambre de traitement par un brassage ultérieur permanent de la matière en poudre (à l'aide des vis de brassage), tandis que la température est progressivement décroissante.

A mesure que la matière poursuit sa route dans ladite installation, le traitement se répète et se poursuit. L'hydratation de la matière de départ, couplée à l'action d'entraînement et de brassage, a pour conséquence que finalement la matière est soumise progressivement à l'action de la vapeur sèche.

Finalement, la matière recueillie à la sortie de l'installation est pratiquement une poudre sèche, dépourvue de vapeur d'eau mais dont les propriétés physiques ont été sensiblement modifiées.

Ceci est en particulier rendu possible par la forme particulière de la vis qui a été décrite qui permet in situ et dans la masse de la matière, la formation de vapeur d'eau en ébullition. La forme particulière de la vis permet de soumettre successivement la matière traitée à une action de poussée et d'entraînement, et à une décompression au cours de son parcours ce qui, en plus du brassage, permet une action directe de la vapeur d'eau, au sein de la matière.

La vapeur qui peut ainsi mieux s'évacuer permet de traiter sur son passage de manière plus intime les particules de matière.

Dans le cas d'une vis dont le pas serait par exemple de 50 mm et la longueur de 3 mètres, la matière serait ainsi pratiquement soumise 60 fois à une action de ce type, consistant en une poussée/ entraînement suivi d'une décompression. Dans le cas où une telle action est encore répétée sur chacun des quinze étages d'une installation, on obtient des résultats particulièrement remarquables. Le principe consiste donc à traiter de manière efficace et complète, et ceci de manière répétée, des petits volumes (et par conséquent des poids réduits) de matière de manière intime à l'aide de la vapeur d'eau, ce qui procure un rendement très supérieur.

A cet égard, le procédé de la présente invention se différencie nettement des techniques connues jusqu'à présent.

Il est bien entendu que la présente invention ne se limite pas uniquement à la description mais que la protection s'étend au cadre défini par les revendications.

**Revendications**

1. Installation pour la préparation de plâtre à haute résistance à partir de sulfate de calcium naturel (gypse) ou de synthèse, caractérisée en ce qu'elle comporte au moins un transporteur à chaînes sans fin (13) équipé de palettes basculables (53) qui est dévié sur des pignons de renvoi (5) de manière à former au moins un brin supérieur (9, 15, 21) et un brin inférieur (11, 17, 23), une trémie d'alimentation (27) en matière de départ disposée au-dessus du premier brin supérieur (9) et un dispositif de chauffage dont les gaz chauds sont propulsés dans des chambres (31 à 39) disposées entre chaque fois un brin supérieur et un brin inférieur.

2. Installation selon la revendication 1, caractérisée en ce qu'elle comporte trois étages de renvoi (7, 13, 19) du transporteur à chaînes (3).

3. Installation selon la revendication 1 ou 2, caractérisée en ce que les palettes basculables (5) sont maintenues en position essentiellement horizontale le long du parcours et un brin supérieur ou inférieur du transporteur à chaînes (3) et basculent en fin de parcours en vue de décharger la matière transportée respectivement sur les palettes du brin inférieur ou supérieur suivant ou bien à travers l'ouverture de déchargement (29), à la sortie de l'installation.

4. Installation selon l'une quelconque des revendications précédentes caractérisée en ce que le transporteur à chaînes (3) se compose de deux chaînes à joues parallèles (51) entre lesquelles sont logées des palettes basculables (53) sur un axe de basculement (55) solidaire de deux chaînes à joues (51).

5. Installation selon l'une quelconque des revendications précédentes caractérisée en ce que les palettes (53) sont maintenues en position horizontale par des guides constitués par les parois inférieures (57, 59) de la chambre et en ce que le mouvement de basculement des palettes (53) est guidé par des butées (61, 63).

6. Installation selon l'une quelconque des revendications précédentes caractérisée en ce qu'elle est équipée de racles (65) d'égalisation de la matière sur le transporteur à chaînes.

7. Installation selon l'une quelconque des revendications précédentes caractérisée en ce qu'elle comporte encore, en aval du transporteur à chaînes, au moins un étage (77, 79) comportant au moins une auge équipée d'une vis de transport (80), les gaz chauds circulant dans lesdites auges.

8. Installation selon l'une quelconque des revendications précédentes caractérisée en ce que la ou les vis d'un premier étage d'auges tourne(nt) dans un sens et la ou les vis de l'étage suivant tourne(nt) dans le sens opposé.

9. Installation selon l'une quelconque des revendications 1 à 7 caractérisée en ce que la ou les vis d'un premier étage d'auge(s) présente(nt) un pas de vis inverse de celui de la ou des vis d'un étage suivant, les vis tournant dans le même sens de rotation.

10. Installation selon l'une quelconque des revendications 7 à 9 caractérisée en ce que la vis de transport comporte un noyau (81) sur lequel s'étend une saillie hélicoïdale (83) qui est surmontée d'une partie d'hélice redressée essentiellement perpendiculaire (85) à l'axe (87) de telle sorte qu'elle présente un contour coudé.

11. Installation selon l'une quelconque des revendications précédentes caractérisée en ce que le transporteur à chaînes (3) et éventuellement les vis (80) se déplacent dans une chambre fermée comportant une ouverture d'admission du transporteur à chaînes et de la matière, éventuellement des vis (80) ainsi qu'une ouverture de sortie (29, 29') et en ce que ladite chambre fermée est équipée de vannes de surpression (43).

12. Installation selon l'une quelconque des revendications précédentes caractérisée en ce qu'elle est montée dans un caisson (1) comportant une fenêtre (45) qui permet de vérifier l'état des palettes qui sont recyclées (25).

13. Procédé de traitement d'une matière de départ constituée de sulfate de calcium afin d'obtenir un plâtre présentant de meilleures caractéristiques en ayant recours aux installations selon l'une quelconque des revendications 1 à 12, caractérisé en ce que :

- ladite matière de départ est concassée sous forme de poudre et est humidifiée à la température ambiante jusqu'à présenter une teneur en eau de l'ordre de 15 à 30 % et de préférence de l'ordre de 15 à 20 % d'eau exprimée par rapport à son poids de départ,

- la matière ainsi humidifiée est introduite dans l'installation dans une chambre de traitement qui elle-même est surchauffée à une température de l'ordre de 500 à 600°C, de manière que, dans cette chambre de traitement, une production importante de vapeur de produise par ébullition de l'eau contenue dans la matière en poudre avec, simultanément à l'action de cette vapeur, dans ladite chambre, un mouvement d'entraînement de la matière à l'aide de palettes,

- cette action à l'état d'ébullition se poursuit après un premier démarrage dans ladite chambre de traitement par un brassage ultérieur permanent de la matière en poudre, tandis que la température est progressivement décroissante.

14. Procédé sleon la revendication 13 caractérisé en ce que le brassage ultérieur est couplé à une action de poussée et d'entraînement et à une décompression de la matière à traiter, ce qui, en plus du brassage, permet une action directe de la vapeur d'eau.

15. Procédé selon la revendication 14 caractérisé en ce qu'on effectue un grand nombre de successions d'actions de poussée/entraînement et décompression et en ce que la matière est soumise progressivement à l'action de la vapeur sèche et est finalement recueillie à la sortie de l'installation à l'état d'une poudre sèche.

FIG.1

0286618

FIG.2

FIG.3

1  45  27  25  15  35  37  39  29  87  29'  31  3  9  11  41  7  5  17  5  82  80  43  33  13  19  21  23  43  77  79

## FIG. 5

## FIG. 4A

## FIG. 4B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A- 811 246 (GYPSUM) <br> * Page 7, lignes 49-63; figures * <br> --- | 1-6,11, 12 | C 04 B 11/032 |
| Y | FR-A- 431 234 (DESAULLES) <br> * Résumé; figures * <br> --- | 1-6,11, 12 | |
| A | DE-B-1 072 867 (BESTA) <br> * Figures * <br> --- | 7-10 | |
| A | EP-A-0 074 887 (DUSSEL) <br> * Résumé * <br> --- | 13-15 | |
| A | FR-A-2 009 799 (SAAR-GIPSWERKE) <br> --- | | |
| A | US-A-1 568 791 (AIKEN) <br> --- | | |
| A | FR-A- 491 174 (HOFMANN) <br> --- | | |
| A | FR-A- 595 664 (FOUQUET) <br> --- | | |
| A | GB-A- 708 409 (COLOMBO) <br> --- | | DOMAINES TECHNIQUES RECHERCHES (Int. Cl.4) |
| A | FR-A- 944 968 (PISCAGLIA) <br> ----- | | C 04 B <br> F 16 B <br> B 65 G |

Le présent rapport a été établi pour toutes les revendications

| Lieu de la recherche | Date d'achèvement de la recherche | Examinateur |
|---|---|---|
| LA HAYE | 07-07-1988 | PEETERS S. |